(19) **Europäisches Patentamt**
**European Patent Office**
**Office européen des brevets**

(11) **EP 3 999 860 B1**

(12) **FASCICULE DE BREVET EUROPEEN**

(45) Date de publication et mention
de la délivrance du brevet:
**08.07.2026 Bulletin 2026/28**

(21) Numéro de dépôt: **20743111.5**

(22) Date de dépôt: **16.07.2020**

(51) Classification Internationale des Brevets (IPC):
***G01Q 10/04*** *(2010.01)*

(52) Classification Coopérative des Brevets (CPC):
**G01Q 10/04; G01Q 30/14**

(86) Numéro de dépôt international:
**PCT/EP2020/070156**

(87) Numéro de publication internationale:
**WO 2021/009290 (21.01.2021 Gazette 2021/03)**

(54) **MICROSCOPE A FORCE ATOMIQUE**

RASTERKRAFTMIKROSKOP

ATOMIC FORCE MICROSCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2019 FR 1908027**

(43) Date de publication de la demande:
**25.05.2022 Bulletin 2022/21**

(73) Titulaires:
• **Paris Sciences et Lettres**
  **75006 Paris (FR)**
• **Centre National de la Recherche Scientifique (CNRS)**
  **75016 Paris (FR)**
• **Sorbonne Université**
  **75006 Paris (FR)**
• **Université Paris Cité**
  **75006 Paris (FR)**

(72) Inventeurs:
• **NIGUÈS, Antoine**
  **75005 Paris (FR)**
• **SIRIA, Alessandro**
  **75011 Paris (FR)**

(74) Mandataire: **Regimbeau**
  **20, rue de Chazelles**
  **75847 Paris Cedex 17 (FR)**

(56) Documents cités:
FR-A1- 2 887 986          US-A- 5 253 516
US-A1- 2007 214 864      US-A1- 2011 307 979

• **GREEN JOHN-BRUCE D ET AL: "Microfabricated tip arrays for improving force measurements", APPLIED PHYSICS LETTERS, A I P PUBLISHING LLC, US, vol. 74, no. 10, 8 March 1999 (1999-03-08), pages 1489 - 1491, XP012022181, ISSN: 0003-6951, DOI: 10.1063/1.123590**

**Description**

**DOMAINE DE L'INVENTION**

La présente invention concerne un microscope à force atomique et un procédé d'évaluation d'une surface d'un échantillon par un microscope à force atomique.

**ETAT DE LA TECHNIQUE**

Le microscope à force atomique (AFM) permet de mesurer la topographie d'une surface avec une résolution de l'ordre du nanomètre. De manière connue, un AFM comprend une sonde, la sonde comprenant une pointe propre à être positionnée en regard de la surface, par exemple au contact et jusqu'à plusieurs centaines de nanomètres de la surface. L'interaction entre la pointe et la surface à évaluer entraîne une variation des propriétés mécaniques de la sonde. Cette variation est enregistrée pour évaluer la surface, par exemple en mesurant des variations de la réflexion d'un faisceau laser sur la sonde, ou des variations des propriétés électriques d'un matériau piézorésistif intégré à la sonde.

De nombreuses méthodes ont été développées pour évaluer les propriétés de la surface à partir de la sonde. Parmi elles, les plus connues sont par exemple la mesure en mode contact, non contact, contact intermittent ou en modulation de fréquence ou d'amplitude. Le mode contact intermittent consiste par exemple à faire vibrer la sonde à sa fréquence de résonance, à une amplitude prédéterminée. L'interaction entre la pointe de la sonde et la surface entraîne une variation de la fréquence de résonance de la sonde, et ainsi une diminution de l'amplitude des vibrations. Différents moyens d'asservissement permettent de maintenir l'amplitude des vibrations de la sonde constante, ou l'amplitude des forces d'interaction entre la pointe et la surface constante, tout en scannant la surface avec la pointe de manière à évaluer la surface.

Lors de l'utilisation d'un microscope AFM, la résolution spatiale, dans un plan tangent à la surface, est limitée par la dimension de la pointe. En revanche, la résolution d'une mesure de force d'interaction entre la pointe et la surface est limitée par les propriétés mécaniques de la sonde.

De manière connue, une sonde d'AFM présente une forme diapason, de taille micrométrique ou millimétrique, fabriquée par exemple en quartz. Giessibl *et al.* (Giessibl, F. J., Pielmeier, F., Eguchi, T., An, T., & Hasegawa, Y. (2011), Comparison of force sensors for atomic force microscopy based on quartz tuning forks and length-extensional resonators, Physical Review B, 84(12), 125409) décrivent l'utilisation d'une sonde micrométrique, présentant une raideur en flexion comprise entre 500 N.m⁻¹ et 3000 N.m⁻¹.

Stowe *et al.* (Stowe, T. D., Yasumura, K., Kenny, T. W., Botkin, D., Wago, K., & Rugar, D., 1997, Attonewton force detection using ultrathin silicon cantilevers, Applied Physics Letters, 71(2), 288-290) décrivent la force minimale $F_{min}$ pouvant être mesurée par une sonde en forme de poutre par la formule (1) :

$$F_{min} = \sqrt{\frac{wt^2}{lQ}} (E\rho)^{(1/4)} (k_B T B)^{(1/2)}$$

où $w$ est la largeur de la poutre, $t$ est l'épaisseur de la poutre, $l$ est la longueur de la poutre, $Q$ est le facteur de qualité de la poutre, $k_B$ est la constante de Boltzmann, $T$ est la température et $B$ est la largeur de la bande passante de détection. La formule (1) incite directement l'homme du métier à développer une sonde la plus légère et la plus souple possible de manière à diminuer le seuil de détection du microscope AFM.

Toutefois, de telles sondes présentent les inconvénients suivants : elles sont à la fois chères et fragiles. Il est fréquent de devoir remplacer la sonde d'un microscope AFM plus de deux fois lors de la mesure de la topographie d'une surface.

A cet effet, Canale *et al.* (Canale, L., Laborieux, A., Mogane, A. A., Jubin, L., Comtet, J., Lainé, A., Bocquet, L., Siria, A. & Niguès, A., 2018, MicroMegascope. Nanotechnology, 29(35), 355501) décrivent un microscope à force atomique, comprenant une sonde macroscopique. La sonde comprend un oscillateur harmonique de taille macroscopique, en particulier un diapason dont la taille est supérieure à 1 cm, sur lequel une pointe en tungsten est montée de manière fixe et destinée à être positionnée en regard de la surface à évaluer. Ainsi, de par les dimensions du diapason, il est possible de modifier le type de pointe sans modifier l'ensemble de la structure de la sonde. Il est aussi possible d'utiliser des sondes moins chères. De plus, la masse de la sonde est plus élevée que celle des sondes de l'art antérieur de plusieurs ordres de grandeur. Ainsi, le couplage de la sonde avec des éléments macroscopiques apte à mesurer la position de la sonde ne modifie pas substantiellement les propriétés mécaniques de la sonde, et les performances de détection du microscope AFM ne sont pas détériorées.

Toutefois, l'évaluation d'une surface en contact avec un autre élément que l'air, par exemple du vide ou un milieu liquide, peut s'avérer complexe. En effet, la sonde doit être au moins en partie introduite dans ce milieu, ce qui accroît la complexité de conception du microscope et/ou entraîne des biais de mesure de la surface.

Le document US 5 253 516 A décrit un microscope à force atomique conçu pour balayer de petits échantillons en utilisant un bras de levier, une pointe de balayage et un détecteur pour mesurer et contrôler le processus de balayage.

Le document US 2007/0214864 A1 décrit un microscope à force atomique où le porte-échantillon est localisé dans la partie déformable d'un levier.

Le document FR 2 887 986 décrit un procédé de mesure de la raideur locale d'un levier avec un oscillateur.

Green et al., "Microfabricated tip arrays for improving force measurements", Applied Physics Letters, (1999) Vol. 74, No. 10, 1489-1491 décrit une mesure de spectroscopie de force de biomolécules attachées à un levier.

Le document US 2011/0307979 A1 décrit un microscope à force atomique conçu pour mesurer dans un milieu liquide.

## EXPOSE DE L'INVENTION

Un but de l'invention est de proposer une solution pour fabriquer un microscope AFM plus simple que les microscopes de l'art antérieur.

Ce but est atteint dans la revendication 1 de la présente invention grâce à un microscope à force atomique pour évaluer une surface d'un échantillon, comprenant :

- un porte-échantillon, présentant une première zone adaptée à recevoir l'échantillon monté de manière fixe par rapport à la première zone,
- une sonde présentant une pointe propre à être positionnée en regard de la surface de l'échantillon, le microscope étant configuré pour permettre un ajustement d'une position de la pointe par rapport à la surface,
- un support,
- le porte échantillon présentant au moins une deuxième zone, distincte de la première zone et fixe par rapport au support, le porte-échantillon étant déformable de sorte à autoriser un déplacement relatif de la première zone par rapport à la deuxième zone,
- le microscope comprenant un détecteur propre à détecter un déplacement de la première zone par rapport à la deuxième zone, le microscope étant configuré pour évaluer une interaction entre la surface et la pointe à partir d'une mesure du déplacement de la première zone du porte échantillon par le détecteur,
- le microscope comprenant un actuateur configuré pour faire vibrer la porte-échantillon à une fréquence prédéterminée.

Comme le porte-échantillon permet de détecter les interactions entre la pointe de la sonde et la surface de l'échantillon, il est possible d'utiliser une sonde qui ne comprend pas de capteur, et ainsi simplifier la conception du microscope et l'évaluation de la surface.

L'invention est avantageusement complétée par les caractéristiques suivantes, prises individuellement ou en l'une quelconque de leurs combinaisons techniquement possibles :

- le porte-échantillon est un oscillateur harmonique,
- le détecteur est monté fixe au porte-échantillon, et préférentiellement fixe à la première zone,
- le microscope comprend un régulateur par asservissement en boucle fermée, le détecteur étant apte à transmettre un signal représentatif d'une mesure du déplacement de la première zone au régulateur et le régulateur étant apte à transmettre un signal de régulation à l'actuateur,
- le porte-échantillon présente une longueur supérieure à 2 mm, notamment supérieure à 1 cm, et préférentiellement supérieure à 3 cm,
- une raideur en flexion du porte-échantillon entre la première zone et la deuxième zone est supérieure à $10^3$ N.m$^{-1}$ notamment supérieure à $10^4$-N.m$^{-1}$ et préférentiellement supérieure à $10^5$ N.m$^{-1}$,
- le microscope comprend plusieurs sondes, chaque sonde présentant une pointe, et est configuré pour permettre un ajustement indépendant de chacune des positions des pointes par rapport à la surface, au moins une des sondes étant préférentiellement fabriquée dans un matériau différent d'une autre sonde,
- le microscope comprend une cellule adaptée à contenir un milieu liquide, la cellule étant montée fixe par rapport à la première zone, et l'échantillon est monté fixe à la cellule,
- le porte-échantillon comprend plusieurs deuxièmes zones,
- la première zone est agencée entre deux deuxièmes zones et à égale distance de chacune des deuxièmes zones.

La revendication 10 de l'invention est un procédé d'évaluation d'une surface d'un échantillon par un microscope à force atomique selon un mode de réalisation de l'invention, comprenant les étapes de :

a) positionnement de la pointe en un point en regard de la surface, préférentiellement à une distance inférieure à 100 nm de la surface et notamment inférieure à 10 nm de la surface,
b) mesure du déplacement de la première zone par rapport à la deuxième zone par le détecteur de manière à évaluer une interaction entre la surface et la pointe,
(c) mise en mouvement de la première zone par l'actuateur à une fréquence prédéterminée, et
(d) mesure d'une variation de l'amplitude des vibrations de la première zone ou de la fréquence des vibrations de la première zone lors d'une interaction entre la surface et la pointe.

L'invention est avantageusement complétée par les caractéristiques suivantes, prises individuellement ou en l'une quelconque de leurs combinaisons techniquement possibles :

- une répétition des étapes a) de positionnement et b) de mesure est mise en œuvre en d'autres points en regard de la surface, et définit préférentiellement un balayage de la surface par la pointe,
- le procédé comprend également une étape d) d'actuation du porte-échantillon, concomitante à l'étape b) de mesure, dans laquelle l'actuateur est actionné de sorte à faire vibrer la première zone du porte-échantillon à une fréquence prédéterminée comprise entre 500 Hz et 10 MHz,
- le porte-échantillon présente au moins une fréquence $f_k$ propre de résonance, et préférentiellement une pluralité de fréquences $f_k$ propres de résonnance, de sorte à faire vibrer la première zone à une (des) fréquence(s) comprise(s) entre ($f_k$ - 0,5.$f_k$) et ($f_k$ + 0,5.$f_k$),
- l'actuateur est actionné de sorte à faire vibrer la première zone du porte-échantillon à plusieurs fréquences prédéterminées.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

[Fig. 1] - la figure 1 illustre schématiquement un microscope à force atomique selon un mode de réalisation de l'invention,

[Fig. 2] - la figure 2 est une photographie d'un microscope à force atomique selon un mode de réalisation de l'invention,

[Fig. 3] - la figure 3 illustre un procédé d'évaluation d'une surface d'un échantillon selon un mode de réalisation de l'invention,

[Fig. 4] -la figure 4 illustre schématiquement une partie d'un microscope selon un mode de réalisation de l'invention adapté à évaluer la surface d'un échantillon dans un milieu liquide,

[Fig. 5] - la figure 5 est une image d'une surface mesurée par un microscope à force atomique selon un mode de réalisation de l'invention.

Sur l'ensemble des figures, les éléments similaires portent des références identiques.

## DESCRIPTION DETAILLEE DE L'INVENTION

*Architecture générale du microscope 1*

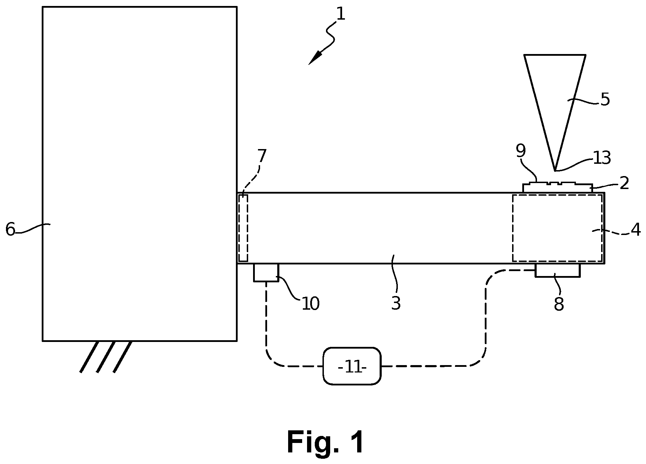

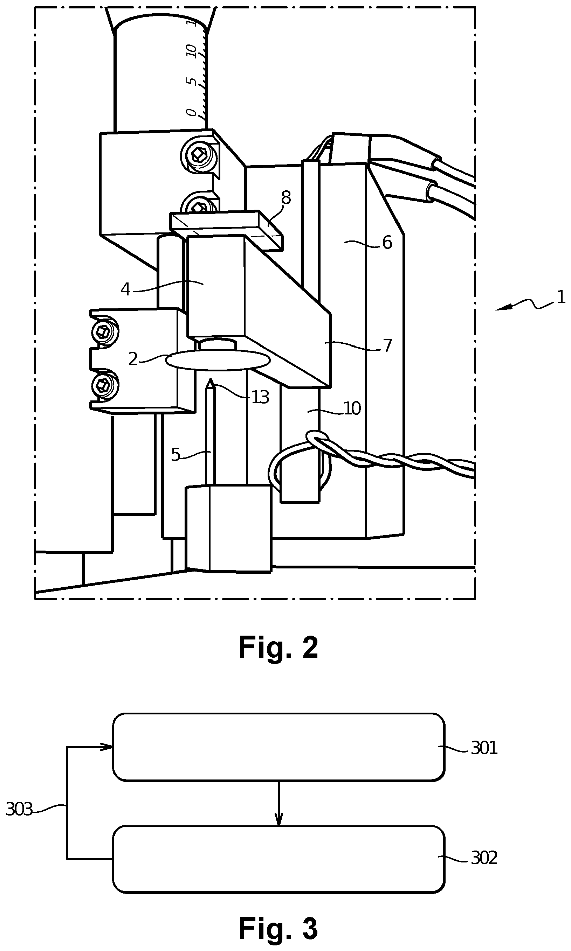

En référence à la figure 1 et à la figure 2, le microscope 1 à force atomique comprend un porte-échantillon 3. Le porte-échantillon 3 supporte un échantillon 2 présentant une surface 9 à être mesurée. En particulier, le porte-échantillon 3 comprend au moins deux zones distinctes : une première zone 4 et une deuxième zone 7. La première zone 4 est adaptée à recevoir l'échantillon 2 monté de manière fixe par rapport à la première zone 4. Le microscope comprend également un support 6. Le support 6 est monté fixe à la terre ou au référentiel du lieu de mesure. La deuxième zone 7 est montée fixe au support. La deuxième zone 5 peut ne faire qu'une seule pièce avec le support 6, ou être soudée au support 6.

Le porte-échantillon 3 est déformable, de sorte à autoriser un déplacement relatif de la première zone 4 par rapport à la deuxième zone 7. La partie du porte-échantillon 3 comprise entre la première zone 4 et la deuxième zone 7 peut être préférentiellement déformable, de sorte que le mouvement relatif de l'échantillon 2 par rapport à deuxième zone 7 résulte d'une déformation de l'ensemble de la partie du porte échantillon 3. Préférentiellement, la raideur en flexion du porte-échantillon 3, et notamment de la ou des parties situées entre la première zone 4 et la ou les deuxièmes zones 7, présente une raideur en flexion supérieure à $10^3$ N.m$^{-1}$, notamment supérieure à $10^4$ N.m$^{-1}$ et plus préférentiellement supérieure à $10^5$ N.m$^{-1}$. De plus, la raideur en flexion du porte-échantillon 3, et notamment de la ou des parties situées entre la première zone 4 et la ou les deuxièmes zones 7, présente une raideur en flexion inférieure à $10^8$ N.m$^{-1}$ est préférentiellement inférieure à $10^7$ N.m$^{-1}$. Le porte-échantillon 3 peut par exemple être fabriqué en aluminium. Ainsi, quand bien même le porte-échantillon 3 est déformable, il peut présenter une rigidité plus élevée que celle des sondes de l'art antérieur tout en restant assez déformable pour permettre une évaluation de la surface.

Le porte-échantillon 3 présente au moins une dimension macroscopique, c'est-à-dire supérieure à 2 mm, notamment supérieure à 1 cm, et préférentiellement supérieure à 3 cm. Le porte-échantillon 3 peut par exemple être de la forme d'une barre cuboïde en aluminium, de 7 cm de long, de 12 mm d'épaisseur et de 7 mm de largeur. La première zone 4 correspond alors à l'une des extrémités de la barre, et la deuxième zone 7 correspond à l'autre extrémité de la barre, monté fixe au support. *A minima,* les dimensions du porte-échantillon 3 doivent permettre au porte échantillon de supporter l'échantillon 2.

Le porte-échantillon 3 est préférentiellement un oscillateur harmonique. Le porte-échantillon 3 peut présenter une fréquence propre comprise entre 500 Hz et 10 MHz, préférentiellement comprise entre 1 kHz et 1 MHz. Ainsi, la mesure de la fréquence du porte-échantillon 3 n'est pas perturbée par un bruit environnant, par exemple entraîné par un bruit électrique ou acoustique. Le porte-échantillon 3 présente par exemple un facteur de qualité supérieur à 10, et préférentiellement supérieur à 100. Par exemple, le porte-échantillon 3 présente une fréquence propre de 2 kHz, et un facteur de qualité de 100.

Le porte-échantillon 3 peut également être de la forme d'un diapason de taille macroscopique, préférentiellement d'une longueur supérieure à 1 cm. La tige du diapason correspond à la deuxième zone 7, et au moins une lame du diapason correspond à la première zone 4. Ainsi, le facteur de qualité du porte-échantillon 3 peut être maximisé par rapport à un porte-échantillon 3 en forme de poutre de la même longueur.

Le microscope 1 comprend également un détecteur 8 propre à détecter un déplacement de la première zone 4 par rapport à la deuxième zone 7. La deuxième zone 7 étant fixe par rapport à la terre, il peut suffire au détecteur 8 de détecter le mouvement absolu de la première zone 4. Le détecteur 8 peut être un accéléromètre, par exemple fabriqué en technologie MEMS, monté de manière fixe par rapport à une partie du porte-échantillon 3 et préférentiellement par rapport à la première zone 4 du porte-échantillon 3. Ainsi, il est possible de maximiser l'amplitude du mouvement du porte-échantillon 3 mesurée. En alternative ou en complément, le détecteur 8 peur être un interféromètre optique, un détecteur capacitif, un détecteur piézoélectrique, un détecteur de déflection laser, et/ou un détecteur à effet tunnel. En référence à la figure 2, le détecteur 8 est par exemple monté fixe en regard de l'échantillon 2 sur la première zone 4 du porte-échantillon 3. La gamme de fréquence de mouvement détectable par le détecteur 8 doit comprendre la fréquence propre du porte-échantillon 3. Le détecteur 8 peut avantageusement mesurer des mouvements correspondant à des vibrations de très faible amplitude du porte-échantillon 3, préférentiellement d'une amplitude inférieure à 1 nm, et notamment d'une amplitude inférieure à 500 pm. Ainsi, il est possible d'utiliser un porte échantillon 3 présentant une rigidité plus élevée que les sondes de l'art antérieur.

*Sonde*

Le microscope 1 comprend au moins une sonde 5. La sonde 5 comprend une pointe 13 propre à être positionnée en regard de la surface 9 de l'échantillon. Le microscope 1 comprend des moyens de positionnement de la pointe 13 par rapport à la surface 9. La sonde 5 peut par exemple comprendre une pointe en tungstène gravée par électrochimie, montée fixe à des moyens de positionnement de la pointe 13 par rapport à une direction tangentielle à la surface 9, permettant un contrôle de la position présentant une précision sub-micrométrique, préférentiellement inférieure à 100 pm. De tels moyens peuvent par exemple comprendre un piezoscanner. De manière différente de l'art antérieur, la sonde peut ne pas comprendre de capteur, et être ainsi passive. Ainsi, le microscope 1 peut préférentiellement comprendre une unité de contrôle configurée pour contrôler une position fixe de la pointe 13 et en même temps mesurer un signal émis par le détecteur 8.

Le microscope 1 peut également comprendre une pluralité de sondes 5. Les différentes sondes 5 peuvent être installées de manière à être interchangeables. Plusieurs sondes 5 peuvent également être présentées de manière concomitante au regard de la surface 9. Le microscope peut par exemple comprendre un manège dans lequel différentes sondes 5 sont fixées au manège. A titre d'exemple, la pointe 13 d'une sonde 5 peut être apte à ressentir une interaction de type répulsive, chimique, magnétique, thermique, ionique, fluidique, et/ou un courant par effet tunnel. Préférentiellement, au moins une des sondes 5 est fabriquée dans un matériau différent d'une autre sonde 5. Chaque sonde 5 peut comprendre des moyens de positionnement indépendants les uns des autres.

Les inventeurs ont découvert que le porte-échantillon 13 peut être utilisé pour détecter les interactions entre la surface 9 et la pointe 13 de la sonde 5. En effet, on peut rapprocher la pointe 13 de la surface 9 à une distance suffisamment petite, par exemple comprise entre 10 nm et 1 $\mu$m, pour augmenter l'interaction entre la pointe 13 et la surface 9, de sorte que les propriétés mécaniques du porte-échantillon 3 sont modifiées. Ainsi, contrairement aux microscopes à force atomique de l'art antérieur, dans lesquels le capteur fait partie ou est fixé à la sonde 5, les interactions entre la surface 9 et la pointe 13 sont détectées par le porte-échantillon 13. Le porte-échantillon 13 est découplé mécaniquement de la sonde 5. Ainsi, il est possible de réduire de manière significative le coût d'une sonde 5, car la sonde 5 ne comprend pas nécessairement de capteur. En outre, le coût du microscope 1 dans son ensemble peut lui aussi être réduit, le porte-échantillon 3 étant réutilisé pour chaque mesure. Enfin, l'évaluation de la surface 9 peut être mise en œuvre dans des milieux différents de l'air de manière simplifiée : en effet, la fabrication du capteur n'a plus à prendre en compte la dissipation de l'énergie transmise au milieu lors du mouvement de la sonde 5 dans un milieu au propriétés différentes de l'air tel qu'un liquide, car le mouvement permettant la détection de l'interaction entre la pointe 13 et la surface 9 est réalisé par le porte-échantillon 3. De plus, même si le milieu en contact avec la surface 9 n'est pas de nature à entraîner plus de forces de friction avec la sonde 5 que l'air, comme c'est le cas pour un vide partiel, l'intégration d'une sonde 5 sans capteur dans une enceinte adaptée audit milieu est simplifiée. En référence à la figure 3, un autre aspect de l'invention est un procédé d'évaluation de la surface 9 par le microscope 1 à force atomique. Le procédé comprend une étape 301 de positionnement de la pointe 13 en un point en regard de la surface 9, préférentiellement à une distance inférieure à 100 nm de la surface et notamment inférieure à 10 nm de la surface 9. Le procédé comprend une étape 302 de mesure du déplacement de la première zone 4 du porte échantillon 3 par le détecteur 8 de manière à évaluer une interaction entre la surface 9 et la pointe 13. Ainsi, le microscope 1 est configuré pour évaluer une interaction entre la surface 9 et la pointe 13 à partir du détecteur 8. Le procédé comprend préférentiellement la répétition 303 des étapes 301 et 302, l'étape 301 étant réalisée en d'autres points en regard de la surface 9. La répétition 303 peut être par exemple mise en œuvre en balayant la surface 9 à évaluer par déplacement de la pointe 13. Le balayage peut être mis en œuvre en répétant les étapes 301 et 302 à des points successifs séparés par exemple par une distance subnanométrique, par exemple comprise entre 100 pm et 1 nm. L'unité de contrôle peut être configurée pour calculer une interaction entre la surface 9 et la pointe 13 au moins à partir du signal de sortie du détecteur 8. Préférentiellement, l'unité de contrôle est configurée pour calculer une interaction entre la surface 9 et la pointe 13 au moins à partir du signal de sortie du détecteur 8 et d'un signal représentatif de la position de la pointe 13 par rapport à la surface 9.

En référence à la figure 1 et à la figure 2, le microscope 1 comprend un actuateur 10 configuré pour faire vibrer le porte échantillon 3, de manière contrôlée, à une fréquence prédéterminée. L'actuateur 10 peut être par exemple un actionneur piézoélectrique (ou *« dither »* en anglais), apte à faire vibrer le porte-échantillon 3 à sa fréquence propre. L'actuateur 10 peut être monté de manière fixe sur le porte-échantillon 3, par exemple supporté par la deuxième partie 7 du porte échantillon 3. Le procédé selon un aspect de l'invention peut comprendre une étape, par exemple simultanée à l'étape de mesure du déplacement de la première zone 4, dans laquelle l'actionneur 10 est actionné de sorte à faire vibrer la première zone 4 du porte-échantillon 3 à une fréquence prédéterminée comprise entre 500 Hz et 10 MHz. Pour une fréquence propre $f_0$ de résonance du porte-échantillon 3, on actionne préférentiellement l'actuateur 10 de sorte à faire vibrer la première zone 4 à une fréquence comprise entre $f_0 - 0{,}5.f_0$ et $f_0 + 0{,}5.f_0$, notamment comprise entre $f_0 - 0{,}1.f_0$ et $f_0 + 0{,}1.f_0$. Ainsi, il est possible de mesurer une variation de l'amplitude des vibrations de la première zone 4 ou de la fréquence des vibrations de la première zone 4 lors d'une interaction entre la surface 9 et la pointe 13. L'actuateur 10 permet de contrôler la déformation de la première zone 4 par rapport à la deuxième zone 7. L'unité de contrôle peut être reliée à l'actuateur 10, et être configurée pour contrôler l'actuateur 10 de sorte à contrôler la déformation de la première zone 4 par rapport à la deuxième zone 7, et en même temps à recevoir le signal de sortie du détecteur 8 de manière à calculer une interaction entre la surface 9 et la pointe 13 de la sonde.

L'actuation de la première zone 4 peut également être mise en œuvre à plusieurs fréquences prédéterminées. Il est ainsi possible d'évaluer le comportement d'un échantillon 2 sous une contrainte à différentes fréquences ou vitesses.

Le microscope 1 peut également comprendre un régulateur 11 par asservissement en boucle fermée. Un signal représentatif du déplacement de la première zone 4 peut être transmis par le détecteur 8 au régulateur 11. Le régulateur 11 peut alors transmettre une consigne de régulation à l'actuateur 10 et/ou au moyen de positionnement de la pointe 13, de manière à réguler les interactions entre la pointe 13 et la surface 9.

Le microscope 1 comprend préférentiellement un actuateur de positionnement de la pointe permettant de positionner la pointe 13 de la sonde 5 en regard de la surface 9. L'actuateur de positionnement de la pointe peut être un piézomoteur. Le régulateur 11 peut être adapté à transmettre un signal de régulation à l'actuateur de positionnement de la pointe, de sorte à maintenir la pointe 13 à une distance de la surface 9 moyenne dans le temps constante et prédéterminée.

*Configurations du porte-échantillon 3*

Le facteur de qualité (défini par le rapport entre la fréquence de résonance et la largeur de la résonnance Lorenztienne à mi-hauteur) peut être contrôlé par la forme du porte-échantillon 3 utilisée. En particulier, le porte-échantillon 3 peut avoir la forme d'une poutre montée de manière fixe à ses deux extrémités au support 6 par les deuxièmes zones 7. La première zone 4 est alors agencée au milieu de la poutre, à égale distance de chacune des deuxièmes zones 7. Ainsi, le facteur de qualité du porte-échantillon 3 peut être maximisé. Le porte-échantillon 3 peut également avoir la forme d'une membrane. Dans ce cas, la première zone 4 est agencée au centre de la membrane, et la deuxième zone 7 est agencée en bordure de la membrane.

*Mesure en milieu liquide*

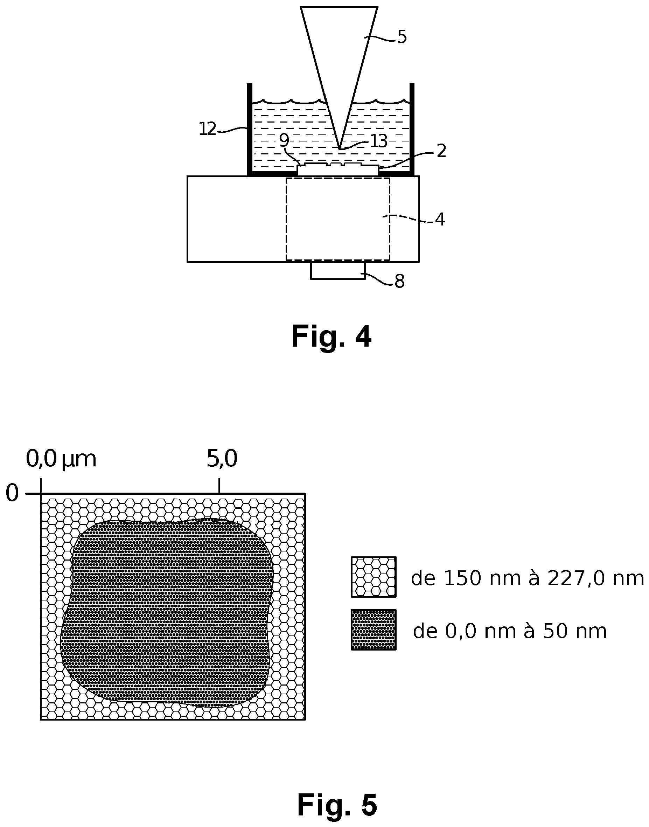

Le microscope 1 est particulièrement avantageux pour mettre en œuvre des mesures d'une surface 9 en milieu liquide. En référence à la figure 4, le microscope 1 peut comprendre une cellule 12. La cellule 12 est adaptée à contenir un milieu liquide ou gélifié. La cellule 12 est montée fixe à la première zone 4. L'échantillon est monté fixe à la cellule 12. De par l'intégration du capteur dans le porte-échantillon 3, la mesure d'une surface 9 en milieu liquide est simplifiée. En effet, il n'est pas nécessaire que la sonde 5, comprenant la pointe 13, oscille. Ainsi, la mesure n'est pas parasitée pas d'éventuelles forces de friction qui peuvent être exercées par le milieu liquide sur la sonde 5 lors de l'évaluation de la surface 9, comme c'est le cas dans les microscopes de l'art antérieur. Ce type de configuration est particulièrement avantageux pour l'évaluation d'objets biologiques attachés à la surface 9. De plus, comme le détecteur 8 n'est pas monté dans une sonde 5 immergée, il est possible d'éviter une dérive du signal de sortie du détecteur 8. En effet, le porte-échantillon 3 et le détecteur 8 peuvent être tenus hors de contact du milieu liquide.

*Résultat d'une mesure de surface 9*

En référence à la figure 5, la surface 9 d'un réseau de calibration en oxyde de silicium est mesurée par le microscope 1 selon le mode de réalisation illustré dans la figure 2. Le pas du réseau est égal à 5 μm, et la profondeur du trou borgne est égale à 100 nm (réseau de calibration).

## Revendications

1. Microscope (1) à force atomique pour évaluer une surface (9) d'un échantillon (2), comprenant :

    - un porte-échantillon (3), présentant une première zone (4) adaptée à recevoir l'échantillon (2) monté de manière fixe par rapport à la première zone (4),
    - une sonde (5) présentant une pointe (13) propre à être positionnée en regard de la surface (9) de l'échantillon (2), le microscope (1) étant configuré pour permettre un ajustement d'une position de la pointe (13) par rapport à la surface (9),
    - un support (6),
    - le porte échantillon (3) présente au moins une deuxième zone (7), distincte de la première zone (4) et fixe par rapport au support (6), le porte-échantillon (3) étant déformable de sorte à autoriser un déplacement relatif de la première zone (4) par rapport à la deuxième zone (7),
    - le microscope comprend un détecteur (8) propre à détecter un déplacement de la première zone (4) par rapport à la deuxième zone (7), le microscope (1) étant configuré pour évaluer une interaction entre la surface (9) et la pointe (13) à partir d'une mesure du déplacement de la première zone (4) du porte échantillon (3) par le détecteur (8), et **caractérisé en ce que**:
    - le microscope comprend un actuateur (10) configuré pour faire vibrer le porte-échantillon (3) à une fréquence prédéterminée.

2. Microscope (1) à force atomique selon la revendication 1, dans lequel le porte-échantillon (3) est un oscillateur harmonique.

3. Microscope (1) à force atomique selon la revendication 1 ou 2, dans lequel le détecteur (8) est monté fixe au porte-échantillon (3), et préférentiellement monté fixe à la première zone (4).

4. Microscope (1) à force atomique selon l'une des revendications 1 à 3, comprenant un régulateur (11) par asservissement en boucle fermée, le détecteur (8) étant apte à transmettre un signal représentatif d'une mesure du déplacement de la première zone (4) au régulateur (11) et le régulateur (11) étant apte à transmettre un signal de régulation à l'actuateur (10).

5. Microscope (1) à force atomique selon l'une des revendications 1 à 4, dans lequel le porte-échantillon (3) présente une longueur supérieure à 2 mm, notamment supérieure à 1 cm, et préférentiellement supérieure à 3 cm.

6. Microscope (1) à force atomique selon l'une des revendications 1 à 5, dans lequel une raideur en flexion du porte-échantillon (3) entre la première zone (4) et la deuxième zone (7) est supérieure à $10^3$ N.m$^{-1}$, notamment supérieure à $10^4$ N.m$^{-1}$ et préférentiellement supérieure à $10^5$ N.m$^{-1}$.

7. Microscope (1) à force atomique selon l'une des revendications 1 à 6, comprenant plusieurs sondes (5), chaque sonde présentant une pointe, le microscope (1) étant configuré pour permettre un ajustement indépendant de chacune des positions des pointes par rapport à la surface (9), au moins une des sondes (5) étant préférentiellement fabriquée dans un matériau différent d'une autre sonde.

8. Microscope (1) selon l'une des revendications 1 à 7, comprenant une cellule (12) adaptée à contenir un milieu liquide, la cellule (12) étant préférentiellement montée fixe par rapport à la première zone (4), et l'échantillon (2) étant monté fixe à la cellule (12).

9. Microscope (1) selon l'une des revendications 1 à 8, dans lequel le porte-échantillon (3) comprend plusieurs deuxièmes zones (7), et préférentiellement dans lequel la première zone (4) est agencée entre deux deuxièmes zones (7) et à égale distance de chacune des deuxièmes zones (7).

10. Procédé d'évaluation d'une surface (9) d'un échantillon (2) par un microscope (1) à force atomique selon l'une des revendications 1 à 9, comprenant les étapes de :

    a) positionnement de la pointe (13) en un point en regard de la surface (9), préférentiellement à une distance inférieure à 100 nm de la surface et notamment inférieure à 10 nm de la surface (9),
    b) mesure du déplacement de la première zone (4) par rapport à la deuxième zone (7) par le détecteur (8) de manière à évaluer une interaction entre la surface (9) et la pointe (13),

    **caractérisé en ce que** le procédé comprend les étapes de:

    (c) mise en mouvement de la première zone (4) par l'actuateur (10) à une fréquence prédéterminée, et
    (d) mesure d'une variation de l'amplitude des vibrations de la première zone (4) ou de la fréquence des vibrations de la première zone (4) lors d'une interaction entre la surface (9) et la pointe (13).

**11.** Procédé selon la revendication 10, dans lequel la répétition des étapes a) définit un balayage de la surface par la pointe.

**12.** Procédé selon la revendication 10 ou 11, comprenant également une étape d) d'actuation du porte-échantillon (3), concomitante à l'étape b) de mesure, dans laquelle l'actuateur (10) est actionné de sorte à faire vibrer la première zone (4) du porte-échantillon (3) à une fréquence prédéterminée comprise entre 500 Hz et 10 MHz, et préférentiellement, le porte-échantillon (3) présentant au moins une fréquence $f_k$ propre de résonnance, de sorte à faire vibrer la première zone (4) à une fréquence comprise entre $(f_k - 0{,}5.f_k)$ et $(f_k + 0{,}5.f_k)$.

**13.** Procédé d'évaluation d'une surface (9) d'un échantillon (2) selon la revendication 12, dans laquelle l'actuateur (10) est actionné de sorte que à faire vibrer la première zone (3) du porte-échantillon (3) à plusieurs fréquences prédéterminées.

## Patentansprüche

**1.** Rasterkraftmikroskop (1) zur Beurteilung einer Oberfläche (9) einer Probe (2), umfassend:

- einen Probenhalter (3), der einen ersten Bereich (4) aufweist, der zur Aufnahme der Probe (2) eingerichtet ist, die relativ zum ersten Bereich (4) fest aufgebracht ist,
- eine Sonde (5), die eine Spitze (13) aufweist, die der Oberfläche (9) der Probe (2) zugewandt positionierbar ist, wobei das Mikroskop (1) so konfiguriert ist, dass eine Einstellung einer Position der Spitze (13) relativ zu der Oberfläche (9) möglich ist,
- einen Träger (6),
- wobei der Probenhalter (3) mindestens einen zweiten Bereich (7) aufweist, der sich von dem ersten Bereich (4) unterscheidet und relativ zu dem Träger (6) feststeht, wobei der Probenhalter (3) derart verformbar ist, dass eine relative Verschiebung des ersten Bereichs (4) relativ zu dem zweiten Bereich (7) gestattet wird,
- wobei das Mikroskop einen Detektor (8) umfasst, der imstande ist, eine Verschiebung des ersten Bereichs (4) relativ zu dem zweiten Bereich (7) zu erfassen,

wobei das Mikroskop (1) so konfiguriert ist, dass es eine Interaktion zwischen der Oberfläche (9) und der Spitze (13) anhand einer Messung der Verschiebung des ersten Bereichs (4) des Probenhalters (3) durch den Detektor (8) beurteilt, und **dadurch gekennzeichnet ist, dass**:

- das Mikroskop einen Aktuator (10) umfasst, der so konfiguriert ist, dass er den Probenhalter (3) mit einer vorbestimmten Frequenz in Schwingung versetzt.

**2.** Rasterkraftmikroskop (1) nach Anspruch 1, wobei der Probenhalter (3) ein harmonischer Oszillator ist.

**3.** Rasterkraftmikroskop (1) nach Anspruch 1 oder 2, wobei der Detektor (8) fest an dem Probenhalter (3) angebracht ist und vorzugsweise fest an dem ersten Bereich (4) angebracht ist.

**4.** Rasterkraftmikroskop (1) nach einem der Ansprüche 1 bis 3, umfassend einen Regler (11) mit geschlossenem Regelkreis, wobei der Detektor (8) dazu geeignet ist, ein für eine Messung der Verschiebung des ersten Bereichs (4) repräsentatives Signal an den Regler (11) zu übertragen und der Regler (11) dazu geeignet ist, ein Regelsignal an den Aktuator (10) zu übertragen.

**5.** Rasterkraftmikroskop (1) nach einem der Ansprüche 1 bis 4, wobei der Probenhalter (3) eine Länge von mehr als 2 mm, insbesondere von mehr als 1 cm und vorzugsweise von mehr als 3 cm aufweist.

**6.** Rasterkraftmikroskop (1) nach einem der Ansprüche 1 bis 5, wobei eine Biegesteifigkeit des Probenhalters (3) zwischen dem ersten Bereich (4) und dem zweiten Bereich (7) größer als $10^3$ N.m$^{-1}$, insbesondere größer als $10^4$ N.m$^{-1}$ und vorzugsweise größer als $10^5$ N.m$^{-1}$ ist.

**7.** Rasterkraftmikroskop (1) nach einem der Ansprüche 1 bis 6, umfassend mehrere Sonden (5), wobei jede Sonde eine Spitze aufweist, wobei das Mikroskop (1) so konfiguriert ist, dass eine unabhängige Einstellung jeder der Positionen der Spitzen relativ zu der Oberfläche (9) möglich ist, wobei mindestens eine der Sonden (5) vorzugsweise aus einem anderen Material als eine andere Sonde hergestellt ist.

**8.** Rasterkraftmikroskop (1) nach einem der Ansprüche 1 bis 7, umfassend eine Zelle (12), die zur Aufnahme eines flüssigen Mediums eingerichtet ist, wobei die Zelle (12) vorzugsweise fest relativ zu dem ersten Bereich (4) angebracht ist und die Probe (2) fest an der Zelle (12) angebracht ist.

**9.** Rasterkraftmikroskop (1) nach einem der Ansprüche 1 bis 8, wobei der Probenhalter (3) mehrere zweite Bereiche (7) umfasst und wobei der erste Bereich (4) vorzugsweise zwischen zwei zweiten Bereichen (7) und in gleichem Abstand zu jedem der zweiten Bereiche (7) eingerichtet ist.

**10.** Verfahren zur Beurteilung einer Oberfläche (9) einer Probe (2) mittels eines Rasterkraftmikroskops (1) nach einem der Ansprüche 1 bis 9, umfassend die folgenden Schritte:

a) Positionieren der Spitze (13) an einem der Oberfläche (9) zugewandten Punkt, vorzugsweise in einem Abstand von weniger als 100 nm von der Oberfläche und insbesondere von weniger als 10 nm von der Oberfläche (9),
b) Messen der Verschiebung des ersten Bereichs (4) relativ zu dem zweiten Bereich (7) durch den Detektor (8), um eine Interaktion zwischen der Oberfläche (9) und der Spitze (13) zu bewerten,

**dadurch gekennzeichnet, dass** das Verfahren die folgenden Schritte umfasst:

(c) Bewegen des ersten Bereichs (4) durch den Aktuator (10) mit einer vorbestimmten Frequenz, und
(d) Messen einer Änderung der Schwingungsamplitude des ersten Bereichs (4) oder der Schwingungsfrequenz des ersten Bereichs (4) während einer Interaktion zwischen der Oberfläche (9) und der Spitze (13).

11. Verfahren nach Anspruch 10, wobei die Wiederholung der Schritte a) einen Abtastvorgang der Oberfläche durch die Spitze definiert.

12. Verfahren nach Anspruch 10 oder 11, das außerdem einen Betätigungsschritt d) des Probenhalters (3) umfasst, der gleichzeitig mit dem Messschritt b) erfolgt, wobei der Aktuator (10) so betätigt wird, dass der erste Bereich (4) des Probenhalters (3) mit einer vorbestimmten Frequenz zwischen 500 Hz und 10 MHz in Schwingung versetzt wird, und wobei der Probenhalter (3) vorzugsweise mindestens eine eigene Resonanzfrequenz $f_k$ aufweist, so dass der erste Bereich (4) mit einer Frequenz zwischen ($f_k$ - $0,5.f_k$) und ($f_k$ + $0,5.f_k$) in Schwingung versetzt wird.

13. Verfahren zur Beurteilung einer Oberfläche (9) einer Probe (2) nach Anspruch 12, wobei der Aktuator (10) so betätigt wird, dass der erste Bereich (4) des Probenhalters (3) mit mehreren vorbestimmten Frequenzen in Schwingung versetzt wird.

**Claims**

1. An atomic force microscope (1) for evaluating a surface (9) of a sample (2), comprising:

- a sample holder (3) comprising a first area (4) configured to receive the sample (2) fixedly mounted with respect to the first area (4),
- a probe (5) comprising a tip (13) configured to be positioned facing the surface (9) of the sample (2), the microscope (1) being configured to allow an adjustment of a position of the tip (13) with respect to the surface (9),
- a support (6),
- the sample holder (3) has at least a second area (7) distinct from the first area (4) and fixed with respect to the support (6), the sample holder (3) being deformable so as to authorize a relative displacement of the first area (4) with respect to the second area (7),
- the microscope comprises a detector (8) configured to detect a displacement of the first area (4) with respect to the second area (7),

the microscope (1) being configured to evaluate an interaction between the surface (9) and the tip (13) based on a measurement of the displacement of the first area (4) of the sample holder (3) by the detector (8), **characterized in that**:
the atomic force microscope (1) comprises an actuator (10) configured to vibrate the sample holder (3) at a predetermined frequency.

2. The atomic force microscope (1) according to claim 1, wherein the sample holder (3) is a harmonic oscillator.

3. The atomic force microscope (1) according to claim 1 or 2, wherein the detector (8) is fixedly mounted on the sample holder (3) and preferably fixedly mounted on the first area (4).

4. The atomic force microscope (1) according to any of claims 1 to 3, comprising a closed-loop servo-control regulator (11), the detector (8) being configured to transmit to the regulator (11) a signal representative of a measurement of the displacement of the first area (4) and the regulator (11) being configured to transmit a regulation signal to the actuator (10).

5. The atomic force microscope (1) according to any of claims 1 to 4, wherein the sample holder (3) has a length greater than 2 mm, in particular greater than 1 cm and preferably greater than 3 cm.

6. The atomic force microscope (1) according to any of claims 1 to 5, wherein a bending stiffness of the sample holder (3) between the first area (4) and the second area (7) is greater than $10^3$ N.m$^{-1}$, in particular greater than $10^4$ N.m$^{-1}$ and preferably greater than $10^5$ N.m$^{-1}$.

7. The atomic force microscope (1) according to any of claims 1 to 6, comprising several probes (5), each probe having a tip, the microscope (1) being configured to allow an independent adjustment of each of the positions of the tips with respect to the surface (9), at least one of the probes (5) being preferably made of a material different from another probe.

8. The atomic force microscope (1) according to any of claims 1 to 7, comprising a cell (12) adapted to contain a liquid medium, the cell (12) being preferably fixedly mounted with respect to the first area (4) and the sample (2) being fixedly mounted on the cell (12).

9. The atomic force microscope (1) according to any of claims 1 to 8, wherein the sample holder (3) comprises several second areas (7) and preferably wherein the first area (4) is arranged between two second areas (7) at equal distance from each of the second areas (7).

10. A method for evaluating a surface (9) of a sample (2) by an atomic force microscope (1) according to any of claims 1 to 9, comprising the steps of:

a) positioning the tip (13) at a point facing the surface (9), preferably at a distance of less than 100 nm from the surface and in particular less than 10 nm from the surface (9),
b) measuring the displacement of the first area (4) with respect to the second area (7) by the detector (8) so as to evaluate an interaction between the surface (9) and the tip (13), **characterized in that** the method comprises the steps of
c) setting in motion of the first area (4) by the actuator (10) at a predetermined frequency, and
d) measuring a variation in the amplitude of the vibrations of the first area (4) or in the frequency of the vibrations of the first area (4) during an interaction between the surface (9) and the tip (13).

11. The method according to claim 10, wherein the repetition of steps a) and b) defines a scanning of the surface by the tip.

12. The method according to claim 10 or 11, also comprising a step d) of actuating the sample holder (3), concomitant with the measurement step b), wherein the actuator (10) is actuated so as to vibrate the first area (4) of the sample holder (3) at a predetermined frequency between 500 Hz and 10 MHz and preferably the sample holder (3) having at least one natural resonant frequency $f_k$, so as to vibrate the first area (4) at a frequency of between $(f_k - 0.5.f_k)$ and $(f_k + 0.5.f_k)$.

13. A method for evaluating a surface (9) of a sample (2) according to claim 12, wherein the actuator (10) is actuated so as to vibrate the first area (4) of the sample holder (3) at several predetermined frequencies.

**Fig. 1**

EP 3 999 860 B1

**Fig. 2**

**Fig. 3**

**Fig. 4**

0,0 µm          5,0

de 150 nm à 227,0 nm

de 0,0 nm à 50 nm

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5253516 A
- US 20070214864 A1
- FR 2887986
- US 20110307979 A1

**Littérature non-brevet citée dans la description**

- **GIESSIBL, F. J** ; **PIELMEIER, F.** ; **EGUCHI, T.** ; **AN, T** ; **HASEGAWA, Y.** Comparison of force sensors for atomic force microscopy based on quartz tuning forks and length-extensional resonators. *Physical Review B*, 2011, vol. 84 (12), 125409
- **STOWE, T. D.** ; **YASUMURA, K** ; **KENNY, T. W** ; **BOTKIN, D.** ; **WAGO, K** ; **RUGAR, D.** Attonewton force detection using ultrathin silicon cantilevers. *Applied Physics Letters*, 1997, vol. 71 (2), 288-290
- **CANALE, L.** ; **LABORIEUX, A.** ; **MOGANE, A. A.** ; **JUBIN, L** ; **COMTET, J.** ; **LAINÉ, A.** ; **BOCQUET, L.** ; **SIRIA, A** ; **NIGUÈS, A.** MicroMegascope. *Nanotechnology*, 2018, vol. 29 (35), 355501
- **GREEN et al.** Microfabricated tip arrays for improving force measurements. *Applied Physics Letters*, 1999, vol. 74 (10), 1489-1491